# EUROPÄISCHE PATENTANMELDUNG

(11) **EP 1 956 514 A1**
(43) Veröffentlichungstag der Anmeldung: **13.08.2008**
(21) Anmeldenummer: 07021056.2
(22) Anmeldetag: 27.10.2007
(51) Int. Cl.: G06K 7/00, B65D 33/34, E05B 73/00, G08B 13/08, G07C 9/00, H01H 36/00, H02B 1/06, H02G 3/14, H05K 5/02, G07F 7/10, G06F 21/00

(54) **Kartenleser mit Manipulationserkennung**

(30) Priorität: 06.02.2007 DE 202007001626 U
(71) Anmelder: ddm hopt + schuler GmbH & Co. KG., 78628 Rottweil (DE)
(72) Erfinder: Hopt, Jürgen, 78628 Rottweil (DE)
(74) Vertreter: Kohler Schmid Möbus

(57) **Zusammenfassung**

Die vorliegende Erfindung betrifft einen Kartenleser zum Datenaustausch mit einer Daten speichernden Karte, bei dem freiliegende elektrische Kontakte (9) des Kartenlesers (1), über die die ausgetauschten Daten unverschlüsselt übertragen werden, von einer Haube (10) abgedeckt sind und durch Abnehmen der Haube (10) ein von der Haube (10) abgedeckter Schalter (12) ausgelöst wird.

## Beschreibung

Die vorliegende Erfindung betrifft einen Kartenleser zum Datenaustausch mit einer Daten speichernden Karte.

Bei bekannten Kartenlesern dieser Art kann der Datenaustausch mit einer Karte durch Kontaktieren von freiliegenden elektrischen Kontakten des Kartenlesers, über die die ausgetauschten Daten unverschlüsselt übertragen werden, manipuliert werden.

Die Aufgabe der vorliegenden Erfindung ist es, solche Manipulationen an einem Kartenleser der eingangs genannten Art zu erkennen und gegebenenfalls zu verhindern.

Diese Aufgabe wird erfindungsgemäß dadurch gelöst, dass freiliegende elektrische Kontakte des Kartenlesers, über die die ausgetauschten Daten unverschlüsselt übertragen werden, von einer Haube abgedeckt sind und dass durch Abnehmen der Haube ein von der Haube abgedeckter Schalter ausgelöst wird.

Vorzugsweise ist der Schalter durch einen gehäusefest angeordneten Reedschalter gebildet, der bei aufgesetzter Haube von dieser abgedeckt ist. Die Haube weist innenseitig einen Magneten auf, der bei aufgesetzter Haube mit dem Reedschalter zusammenwirkt. Der Reedschalter hat den wesentlichen Vorteil, dass er nicht nur durch Abheben der Haube, sondern schon durch bloßes Verschieben der Haube ausgelöst wird.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung

Es zeigt:
- Fig. 1: den erfindungsgemäßen Kartenleser in einer Schnittansicht gemäß |-| in Fig. 2;
- Fig. 2: die Draufsicht von oben auf den Kartenleser von Fig. 1; und
- Fig. 3: eine Schnittansicht des Kartenlesers in einer Schnittansicht gemäß III-III in Fig. 1.

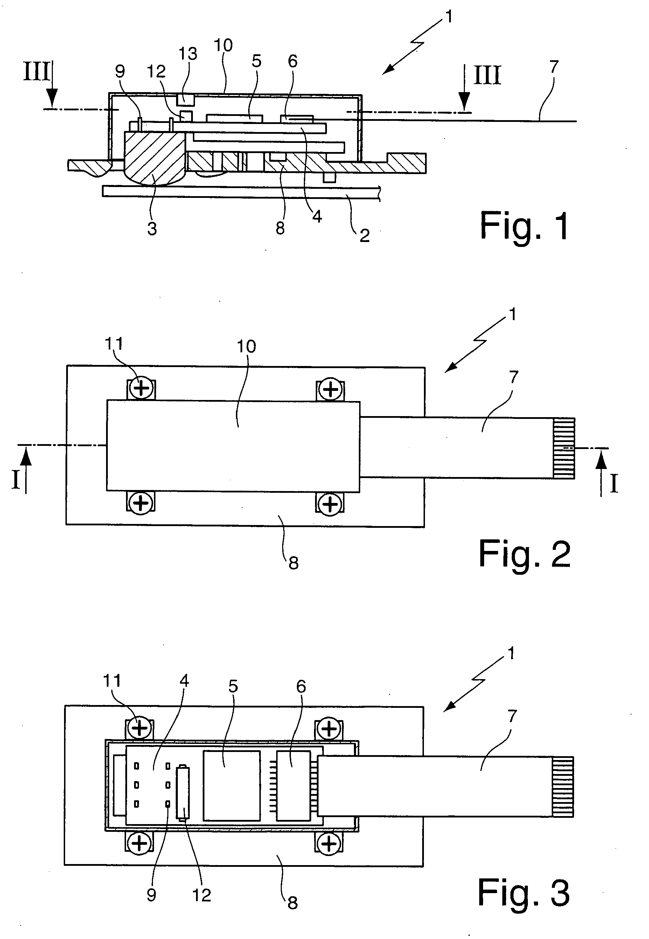

Der in **Fign. 1-3** gezeigte Chipkartenleser **1** dient zum Lesen von Daten einer in den Kartenleser 1 eingeführten Magnetkarte **2**, die einen Magnetstreifen zum Speichern von Daten aufweist.

Der Chipkartenleser 1 weist einen Magnetkopf (Lesekopf) **3** auf, der auf der Vorderseite einer Leiterplatte **4** angeordnet ist und mit seiner Leseseite bis nahe an die Kartenbahn heranreicht, um die Daten einer vorbeigeführten Magnetkarte 2 zu lesen. Die so gelesenen Daten werden mithilfe eines auf der Rückseite der Leiterplatte 4 angeordneten Mikroprozessors (Verschlüsselungseinheit) **5** verschlüsselt und die verschlüsselten Daten über einen Stecker (z.B. Molexstecker) **6** und eine Flexleitung **7** zur weiteren Verarbeitung herausgeführt. Die Leiterplatte 4 ist am Lesergehäuse **8** befestigt, wobei der Magnetkopf 3 durch eine Öffnung des Lesergehäuses 8 hindurch bis nahe an die Kartenbahn heranreicht.

Zwischen Magnetkopf 3 und Mikroprozessor 5 werden die gelesenen Daten unverschlüsselt übertragen und könnten dort an freiliegenden elektrischen Kontakten **9**, wie z.B. an den mit der Rückseite der Leiterplatte 4 verlöteten Kontaktbeinen des Magnetkopfes 3 oder an rückseitigen Leiterbahnen der Leiterplatte 4, zu Manipulationszwecken abgegriffen werden. Um solche Manipulationen festzustellen, sind alle freiliegenden elektrischen Kontakte 9, über die gelesenen Daten unverschlüsselt übertragen werden, mit einer ca. 0,5 mm starken Haube **10** abgedeckt bzw. umhüllt. Genauer gesagt ist die gesamte Rückseite der Leiterplatte 4 mit allen darauf vorgesehenen Bauteilen durch die Haube 10 abgedeckt. Die Haube 10 ist mit vier Schrauben **11** am Kartenlesergehäuseträger 8 befestigt. Zusätzlich ist die Haube 10 durch einen Reedschalter **12** gesichert, der auf der Rückseite der Leiterplatte 4 angeordnet ist und mit einem innenseitig an der Haube 10 vorgesehenen Magneten **13** zusammenwirkt. Der Reedschalter 12 ist Teil einer in den Mikroprozessor 5 integrierten Überwachungseinrichtung oder Teil einer externen Steuereinheit.

Wird die Haube 10 auf den Kartenlesergehäuseträger 8 aufgesetzt und angeschraubt, wird der Reedschalter 12 durch den Magneten 13 geschlossen. Wird die Haube 10 abgeschraubt und angehoben, wird der Reedschalter 12 geöffnet. Das Öffnen des Reedschalters 12 erfolgt bei einer Bewegung des Magneten 13 zum Reedschalter 12 von ca. 0,5 bis 1 mm und wird vom Mikroprozessor 5 oder von der externen Steuereinheit erkannt, die dann keinen Lesevorgang des Magnetkopfes 3 mehr zulassen bzw. den Mikroprozessor 5 außer Funktion setzen. Eine unbemerkte Manipulation an den elektrischen Kontakten 9 ist somit nicht möglich, so dass ein "manipulationssicherer" Kartenleser 1 ermöglicht wird.

## Patentansprüche

1. Kartenleser (1) zum Datenaustausch mit einer Daten speichernden Karte (2),
**dadurch gekennzeichnet,**
**dass** freiliegende elektrische Kontakte (9) des Kartenlesers (1), über die die ausgetauschten Daten unverschlüsselt übertragen werden, von einer Haube (10) abgedeckt sind und dass durch Abnehmen der Haube (10) ein von der Haube (10) abgedeckter Schalter (12) ausgelöst wird.

2. Kartenleser nach Anspruch 1, **dadurch gekennzeichnet, dass** der Schalter (12) durch einen gehäusefest angeordneten Reedschalter gebildet ist, der bei aufgesetzter Haube (10) von dieser abgedeckt ist, und dass die Haube (10) innenseitig einen Magneten (13) aufweist, der bei aufgesetzter Haube (10) mit dem Reedschalter (12) zusammenwirkt.

3. Kartenleser nach Anspruch 1, **dadurch gekennzeichnet, dass** der Schalter durch einen innenseitig an der Haube (10) angeordneten Reedschalter gebildet ist, der mit einem gehäusefest angeordneten Magneten zusammenwirkt, der bei aufgesetzter Haube (10) von dieser abgedeckt ist.

4. Kartenleser nach einem der vorhergehenden Ansprüche, **dadurch gekennzeichnet, dass** die Haube (10) am Kartenlesergehäuse (8) befestigt, insbesondere angeschraubt ist.

5. Kartenleser nach einem der vorhergehenden Ansprüche, **dadurch gekennzeichnet, dass** die freiliegenden elektrischen Kontakte (9) zwischen einem Lesekopf (3) des Kartenlesers (1) und einer die gelesenen Daten verschlüsselnden Verschlüssungseinheit (5) vorgesehen sind.

6. Kartenleser nach Anspruch 5, **dadurch gekennzeichnet, dass** die freiliegenden elektrischen Kontakte (9) auf einer Leiterplatte (4) vorgesehen sind, auf der der Lesekopf (3), die Verschlüssungseinheit (5) und der Reedschalter (12) angeordnet sind, und dass die Leiterplatte (4) durch die aufgesetzte Haube (10) abgedeckt ist.

7. Kartenleser nach Anspruch 6, **dadurch gekennzeichnet, dass** auf der Leiterplatte (4) ein mit der Verschlüssungseinheit (5) verbundener Stecker (6) vorgesehen ist, in den ein aus der aufgesetzten Haube (10) herausgeführtes Kabel (7) eingesteckt ist.

8. Kartenleser nach einem der vorhergehenden Ansprüche, **dadurch gekennzeichnet, dass** der Schalter (12) an eine interne, insbesondere in die Verschlüssungseinheit (5) integrierte Überwachungseinrichtung oder an eine externe Steuereinheit angeschlossen ist.
